# FASCICULE DE BREVET EUROPEEN

(11) **EP 1 002 665 B1**
(45) Date de publication et mention de la délivrance du brevet: **30.07.2003**
(21) Numéro de dépôt: 99420229.9
(22) Date de dépôt: 18.11.1999
(51) Int. Cl.: B60B 17/00, B60B 21/08

(54) **Roue de sécurité, procédé de fabrication d'une telle roue et bogie équipé d'une telle roue**
Sicherheitsrad , Herstellungsverfahren und Drehgestell mit solchem Rad
Safety wheel, method of production and bogie equipped with such a wheel

(30) Priorité: 19.11.1998 FR 9814734
(43) Date de publication de la demande: 24.05.2000
(73) Titulaire: Alstom Holdings, 75116 Paris (FR); VALDUNES, 92800 Puteaux (FR)
(72) Inventeur: Landrot, Alain, 71200 Le Creusot (FR); Demilly, François, 59240 Dunkerque (FR)
(74) Mandataire: Myon, Gérard Jean-Pierre

(56) Documents cités:
- EP-A- 0 824 993
- WO-A-98/43834
- DE-B- 1 186 900
- FR-A- 2 741 582
- GB-A- 2 060 530

## Description

La présente invention concerne une roue de sécurité pour bogie de voiture de métro, ou analogue, sur pneumatiques, un procédé de fabrication d'une telle roue ainsi qu'un bogie de rame de métro, ou analogue, sur pneumatiques, équipé de telles roues.

De manière habituelle, une voiture de métro sur pneumatiques comprend deux bogies, dont chacun est équipé de pneumatiques de roulement disposés aux extrémités latérales du châssis de ce bogie. Entre ce châssis et chaque pneumatique est interposée une roue dite de sécurité, co-axiale au pneumatique de roulement et réalisée en acier.

Chaque roue de sécurité possède une portion périphérique formant jante, comportant une portion de freinage ou table, prolongée radialement vers l'extérieur par une portion de guidage ou mentonnet. En fonctionnement normal du métro, le bogie roule sur ses pneumatiques, les roues de sécurité assurant uniquement une fonction de guidage par l'intermédiaire de leur mentonnet. Le freinage de la voiture est assuré à la fois par récupération électrique et de façon mécanique. A cet effet, la table de la roue de sécurité est soumise à une pression exercée par la semelle d'un organe de freinage solidaire du châssis. De plus, en cas de crevaison du pneumatique, la roue de sécurité entre en contact avec un rail, par l'intermédiaire de la table de freinage, ce qui assure le roulage de la voiture.

De manière classique, ces roues de sécurité sont réalisées en un acier au carbone conforme au type R2 de la norme UIC 812-3. Leur procédé de réalisation consiste tout d'abord à chauffer la roue au-dessus de la température d'austénitisation de l'acier qui la constitue, c'est-à-dire environ 890°C. La roue ainsi chauffée est ensuite soumise à un traitement dit normalisé, consistant à la laisser refroidir lentement, sans action thermique extérieure. La roue ainsi obtenue possède une dureté homogène d'environ 700 à 750 MPa, soit entre 195 et 220 sur l'échelle Brinell.

DE-B-11 86 900 décrit une roue de sécurité selon le préambule de la revendication 1.

Ce type de roues de sécurité présente cependant certains inconvénients. En effet, il a été constaté qu'elles sont sujettes à une usure rapide de leur table de freinage, ce qui limite leur utilisation à environ 100 000 km dans le cas d'un freinage mécanique. Il est donc nécessaire de procéder à un changement fréquent de ces roues, ce qui induit un surcoût.

Afin de pallier les différents inconvénients de l'art antérieur évoqués ci-dessus, l'invention se propose de réaliser une roue de sécurité qui, tout en assurant un guidage fiable du bogie qui en est équipé, possède une durée de vie supérieure à celle des roues de l'art antérieur.

A cet effet, l'invention a pour objet une roue de sécurité selon la revendication 1.

Des caractéristiques avantageuses de cette roue de sécurité font l'objet des revendications 2 et 3.

L'invention a également pour objet un procédé de réalisation d'une roue de sécurité, selon la revendication 4.

Des caractéristiques avantageuses de ce procédé font l'objet des revendications 5 à 10.

L'invention a enfin pour objet un bogie de voiture de métro, ou analogue, sur pneumatiques, comprenant des pneumatiques, un châssis reposant sur ces derniers et des roues de sécurité, dont chacune est interposée entre le châssis et un pneumatique correspondant, caractérisé en ce que chaque roue de sécurité est telle que décrite ci-dessus.

L'invention va être décrite ci-dessous, en référence aux dessins annexés, donnés uniquement à titre d'exemples non limitatifs et dans lesquels :
- la figure 1 est une vue schématique de dessus d'un bogie de voiture de métro sur pneumatiques, équipé de roues de sécurité conformes à l'invention ;
- la figure 2 est une vue schématique de côté illustrant une phase d'un procédé de réalisation d'une roue de sécurité représentée à la figure 1 ; et
- la figure 3 est une vue en coupe diamétrale partielle représentant une roue de sécurité conforme à l'invention, obtenue selon le procédé illustré à la figure 2.

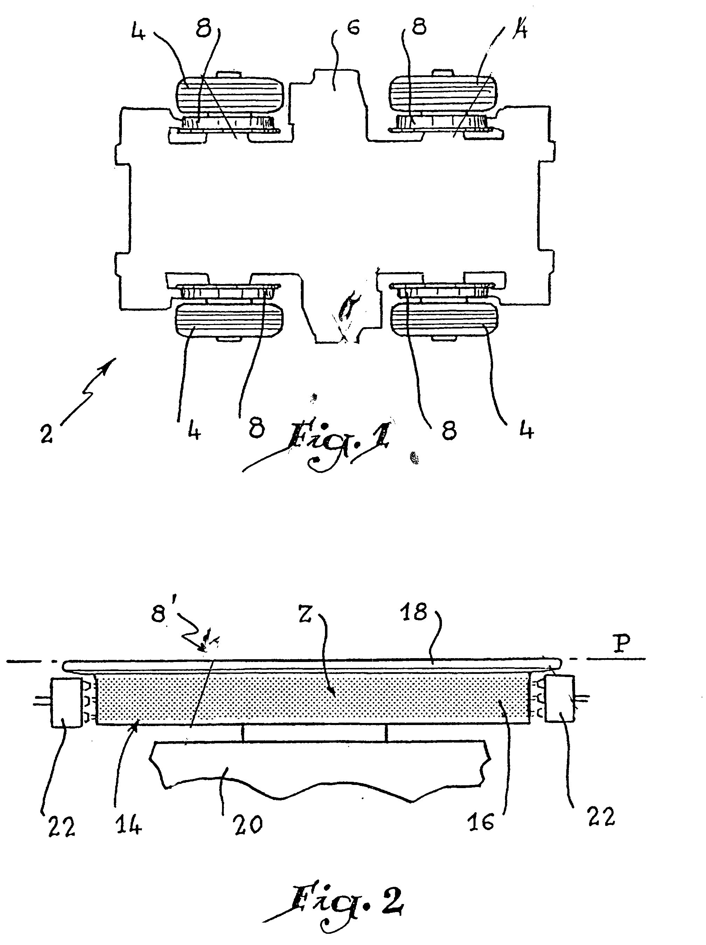

La figure 1 représente un bogie 2 équipant une voiture non représentée de métro sur pneumatiques. De manière classique, ce bogie comprend des pneumatiques 4 propres à se déplacer sur une piste de roulement non représentée et qui supportent un châssis central 6. Des roues de sécurité 8, qui sont interposées entre le châssis 6 et chacun des pneumatiques 4, sont propres à entrer en contact avec un rail métallique en cas de crevaison d'un des pneumatiques. Chaque roue 8 est disposée de manière co-axiale au pneumatique 4 qui lui est adjacent.

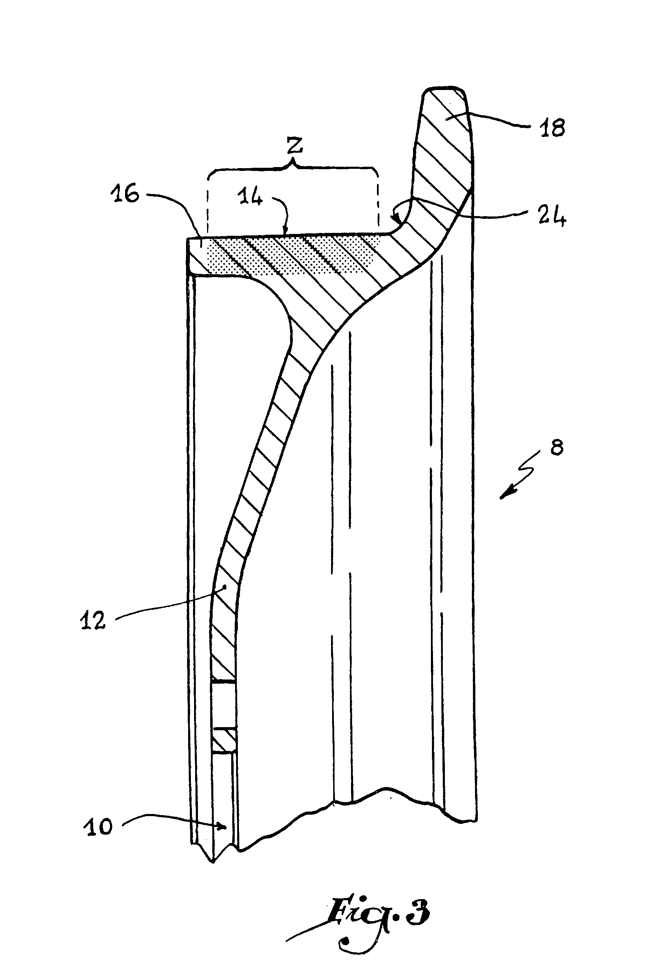

La figure 2 illustre une des phases d'un procédé de fabrication d'une roue de sécurité 8 de la figure 1, alors que la figure 3 représente la roue 8 ainsi obtenue.

La réalisation d'une de ces roues de sécurité 8 consiste tout d'abord à réaliser une ébauche, désignée par la référence 8' sur la figure 2 et dont le profil est analogue à celui de la roue définitive. Comme le montre la figure 3, cette roue 8 comprend, comme cela est connu, un moyeu central 10 de fixation à l'axe d'un pneumatique 4, moyeu à partir duquel s'étend un voile intermédiaire 12 terminé par une zone périphérique extérieure 14, formant jante.

Cette dernière comprend une portion de freinage 16, ou table, de forme cylindrique, qui est prolongée à une extrémité par une portion ou flasque de guidage 18, appelé mentonnet, faisant saillie radialement vers l'extérieur. Une fois la roue de sécurité montée sur le bogie, le mentonnet 18 est adjacent au châssis 6. En service, la table 16 est propre à recevoir l'action d'un organe de freinage mécanique non représenté, et elle se substitue au pneumatique 4 en cas de crevaison de ce dernier, alors que le mentonnet 18 permet le guidage du bogie lors de la prise d'aiguillages.

L'ébauche 8' est réalisée en un acier au carbone par exemple conforme au type R2 de la norme UIC 812-3, qui est l'acier constitutif des roues de sécurité de l'art antérieur. Cet acier peut également être conforme au type R8 de cette même norme.

Selon une variante avantageuse, on peut utiliser l'un ou l'autre de ces deux aciers modifiés par des teneurs en silicium, molybdène et chrome pour monter respectivement en poids jusqu'à 0,7% de silicium, 0,120% de molybdène et 0,4% de chrome.

La première phase de traitement de l'ébauche 8' consiste tout d'abord à la chauffer, afin de la porter au-dessus de la température d'austénitisation de l'acier qui la constitue, c'est-à-dire environ 850°. L'ébauche ainsi chauffée est ensuite soumise à une phase de trempe locale, illustrée à la figure 2.

A cet effet, on place, sur un touret central 20, l'ébauche 8' dans une position sensiblement horizontale, à savoir que son plan principal P est disposé horizontalement. Il est à noter que le mentonnet 18 est situé au-dessus de la table 16. Cette dernière est entourée, sur l'ensemble de sa périphérie, par des buses 22 projetant un liquide de refroidissement, par exemple de l'eau. La zone soumise à l'action des buses est désignée par la référence Z. Ceci permet d'effectuer une trempe locale de cette table 16, pendant une durée d'environ 5 à 15 minutes, de façon à abaisser la température d'environ 700°C.

Etant donné que le mentonnet 18 est placé au-dessus de la table 16, durant la trempe de cette dernière, il n'est pas soumis à l'action de l'eau de refroidissement, qui s'écoule par gravité dans la direction opposée à ce mentonnet. De la sorte, ce dernier se refroidit naturellement à l'air ambiant, sensiblement sans action thermique extérieure, comme dans le cadre du traitement normalisé.

Une fois la trempe locale de la table 16 réalisée, on chauffe l'ébauche à une température comprise entre 400 et 500°C, durant une durée comprise entre 1 et 2 heures. Ceci permet d'effectuer un revenu de la table 16 soumise à la trempe. Etant donné que le mentonnet 18 n'a pas été sujet à une telle trempe, cette phase de chauffage ultérieure est globalement sans action sur ses propriétés, de sorte que le traitement que subit le mentonnet est analogue à celui dit normalisé.

Le fait de soumettre l'ébauche 8' à une trempe localisée de la table 16, puis d'effectuer un revenu de cette dernière, conduit à la formation d'une roue de sécurité 8 dont la dureté n'est pas identique en tous points. En se référant à la figure 3, la table 16 possède, dans la région Z soumise à l'action des buses de refroidissement 22, une dureté comprise entre 1000 et 1050 MPa, soit entre 293 et 311 sur l'échelle Brinell.

En revanche, le mentonnet 18 possède, à son extrémité opposée à la table 16, une dureté analogue à celle des roues de sécurité de l'art antérieur, à savoir comprise entre 700 à 750 MPa, soit 195 à 220 sur l'échelle Brinell. La dureté de l'ensemble de la zone périphérique extérieure 14 varie progressivement entre la table 16 et le mentonnet 18. A titre d'exemple, la partie de liaison 24, qui présente une forme d'arc de cercle en section transversale, possède une dureté comprise entre 825 et 875 MPa, soit entre 230 et 245 sur l'échelle Brinell.

L'invention permet de réaliser les objectifs précédemment mentionnés. En effet, la roue de sécurité conforme à l'invention possède une portion de freinage dont la dureté est supérieure à celle des roues de l'art antérieur. Ceci permet de conférer une résistance mécanique accrue à cette portion de freinage, et donc d'en augmenter la longévité, par comparaison avec l'art antérieur. La roue de sécurité conforme à l'invention possède une durée de vie au moins double de celle d'une roue de l'art antérieur, lorsque ces deux roues sont réalisées dans le même acier.

De plus, la roue conforme à l'invention possède une portion de guidage dont la dureté est sensiblement analogue à celle des roues de l'art antérieur. De la sorte, cette portion de guidage est à même de ne pas endommager les aiguillages avec lesquels elle entre en contact. En effet, si cette portion de guidage possédait une dureté analogue à celle de la portion de freinage de la roue de l'invention, cette portion de guidage serait d'une grande fragilité et dégraderait les aiguillages.

L'emploi d'un acier comprenant jusqu'à 0,700% de silicium, 0,120% de molybdène et 0,400% de chrome est avantageux. En effet, un tel acier, par comparaison avec ceux utilisés dans l'art antérieur, se prête mieux aux opérations de trempe locale et de revenu intervenant dans le procédé de l'invention.

Une fois effectuée la trempe locale de la portion de freinage, chauffer l'ensemble de l'ébauche, y compris la portion de guidage, se révèle avantageux en termes de commodité de réalisation du procédé. De plus, ce chauffage ne modifie pas les propriétés de cette portion de guidage.

## Revendications

1. Roue de sécurité (8) pour bogie (2) de voiture de métro, ou analogue, sur pneumatiques (4), destinée à être interposée entre un châssis (6) du bogie (2) et un pneumatique (4) correspondant, ladite roue (8) comportant une zone périphérique extérieure (14) comprenant une portion de freinage (16), propre à recevoir l'action d'un organe de freinage mécanique, ainsi qu'une portion de guidage (18), faisant saillie radialement vers l'extérieur à partir de la portion de freinage (16), **caractérisée en ce que** la dureté de la portion de freinage (16) est nettement supérieure à la dureté de la portion de guidage (18), et **en ce que**, sur l'échelle Brinell, la dureté de la portion de freinage (16) est comprise entre 293 et 311, alors que la dureté de la portion de guidage (18) est comprise entre 195 et 220.

2. Roue de sécurité suivant la revendication 1, **caractérisée en ce qu'**elle est réalisée en un acier au carbone, conforme au type R2 ou au type R8 de la norme UIC 812-3.

3. Roue de sécurité suivant la revendication 2, **caractérisée en ce que** ledit acier au carbone comprend, en poids, jusqu'à 0,700% de silicium, jusqu'à 0,120% de molybdène et jusqu'à 0,400% de chrome.

4. Procédé de réalisation d'une roue de sécurité (8) pour bogie (2) de voiture de métro, ou analogue, sur pneumatiques (4), destinée à être interposée entre un châssis (6) du bogie et un pneumatique (4) correspondant, dans lequel on porte une ébauche (8') en acier au-dessus de la température de transformation austénitique dudit acier, ladite ébauche (8') possédant la forme de la roue définitive (8) et comportant une zone périphérique extérieure (14) comprenant une portion de freinage (16), propre à recevoir l'action d'un organe de freinage mécanique, ainsi qu'une portion de guidage (18), faisant saillie radialement vers l'extérieur à partir de la portion de freinage (16), **caractérisé en ce qu'**il comprend les étapes suivantes :
- effectuer une trempe sélective de la portion de freinage (16) de l'ébauche (8') portée au-dessus de la température de transformation austénitique dudit acier, sans soumettre la portion de guidage (18) à cette trempe, puis à
- chauffer au moins la portion de freinage (16) trempée, afin de réaliser une opération de revenu de cette portion de freinage,
de sorte que la dureté de la portion de freinage (16) de la roue définitive est nettement supérieure à la dureté de la portion de guidage (18) de cette roue, et **en ce que**, sur l'échelle Brinell, la dureté de la portion de freinage (16) est comprise entre 293 et 311, alors que la dureté de la portion de guidage (18) est comprise entre 195 et 220.

5. Procédé de réalisation suivant la revendication 4, **caractérisé en ce qu'**on effectue la trempe sélective de la portion de freinage (16) pendant une durée comprise entre 5 et 15 minutes, de manière à porter cette portion de freinage (16) à une température comprise entre 150 et 250°C.

6. Procédé de réalisation suivant la revendication 4 ou 5, **caractérisé en ce que** l'étape de trempe sélective de la portion de freinage (16) comprend les étapes suivantes :
- disposer l'ébauche (8') portée au-dessus de la température de transformation austénitique dudit acier, de manière sensiblement horizontale, sa portion de guidage (18) étant placée au-dessus de sa portion de freinage (16), puis
- arroser la portion de freinage (16) au moyen d'un liquide de refroidissement.

7. Procédé de réalisation suivant l'une quelconque des revendications 4 à 6, **caractérisé en ce qu'**on chauffe au moins la portion de freinage (16) trempée à une température comprise entre 850 et 900°C, pendant une durée comprise entre 2 et 3 heures.

8. Procédé de réalisation suivant l'une quelconque des revendications 4 à 7, **caractérisé en ce qu'**on chauffe l'ensemble de l'ébauche (8'), après avoir effectué la trempe de la portion de freinage (16).

9. Procédé de réalisation suivant l'une quelconque des revendications 4 à 8, **caractérisé en ce que** ladite ébauche (8') est réalisée en un acier au carbone conforme au type R2 ou au type R8 de la norme UIC 812-3.

10. Procédé de réalisation suivant la revendication 9, **caractérisé en ce que** ledit acier au carbone comprend, en poids, jusqu'à 0,700% de silicium, jusqu'à 0,120% de molybdène et jusqu'à 0,400% de chrome.

11. Bogie (2) de voiture de métro, ou analogue, sur pneumatiques, comprenant des pneumatiques (4), un châssis (6) reposant sur ces pneumatiques (4) et des roues de sécurité (8), dont chacune est interposée entre le châssis (6) et un pneumatique (4) correspondant, **caractérisé en ce que** chaque roue de sécurité (8) est conforme à l'une quelconque des revendications 1 à 3.

## Patentansprüche

1. Sicherheitsrad (8) für ein Drehgestell (2) eines Untergrundbahnwagens oder ähnliches auf Luftbereifung (4), das dazu bestimmt ist, zwischen einem Rahmen (6) des Drehgestelles (2) und einem korrespondierenden Luftreifen (4) angeordnet zu sein, wobei das Rad (8) eine umfängliche äußere Zone (14) aufweist, die einen Bremsteil (16) umfaßt, der geeignet ist, die Wirkung eines mechanischen Bremsorgans aufzunehmen, sowie einen Führungsteil (18), der radial nach außen ausgehend von dem Bremsteil (16) vorspringt, **dadurch gekennzeichnet, daß** die Härte des Bremsteils (16) deutlich größer ist als die Härte des Führungsteiles (18), und daß, auf der Brinell-Skala, die Härte des Bremsteiles (16) zwischen 293 und 311 enthalten ist, sowie die Härte des Führungsteiles (18) zwischen 195 und 220 enthalten ist.

2. Sicherheitsrad gemäß Anspruch 1, **dadurch gekennzeichnet, daß** es aus einem Kohlenstoffstahl hergestellt ist, gemäß dem Typ R2 oder dem Typ R8 der Norm UIC 812-3.

3. Sicherheitsrad gemäß Anspruch 2, **dadurch gekennzeichnet, daß** der Kohlenstoffstahl in Gew.-% bis zu 0,700% Silizium, bis zu 0,120% Molybdän und bis zu 0,400% Chrom enthält.

4. Verfahren zum Herstellen eines Sicherheitsrades (8) für ein Drehgestell (2) eines Untergrundbahnwagens oder ähnliches mit Luftbereifung (4), bestimmt um zwischen einem Rahmen (16) eines Drehgestelles und einem korrespondierenden Luftreifen (4) angeordnet zu sein, bei dem man einen Radrohling (8') aus Stahl oberhalb der Temperatur der austenitischen Umwandlung des Stahles versetzt, wobei der Radrohling (8') die Form des endgültigen Rades (8) aufweist und er eine äußere umfängliche Zone aufweist, die ein Bremsteil (16) umfaßt, der geeignet ist, die Wirkung eines mechanischen Bremsorgans aufzunehmen, sowie ein Führungsteil (18), das ausgehend von dem Bremsteil (16) radial nach außen vorspringt, **dadurch gekennzeichnet, daß** es die folgenden Schritte umfaßt:
- Bewirken einer selektiven Härtung des Bremsteiles (16) des Radrohlings (8'), der oberhalb der Temperatur der austenitischen Umwandlung des Stahles gebracht wird, ohne den Führungsteil (18) dieser Härtung zu unterwerfen, dann
- Erhitzen zumindest des gehärteten Bremsteils (16), um eine Vergütungsbehandlung dieses Bremsteiles durchzuführen, so daß die endgültige Härte des Bremsteiles des Rades deutlich größer als die Härte des Führungsteiles (18) dieses Rades ist, und daß, auf der Brinell-Skala, die Härte des Bremsteiles (16) zwischen 293 und 311 enthalten ist, während die Härte des Führungsteiles (18) zwischen 195 und 220 enthalten ist.

5. Verfahren zum Herstellen gemäß Anspruch 4, **dadurch gekennzeichnet, daß** die selektive Härtung des Bremsteiles (16) während eine Dauer zwischen 5 und 15 Minuten durchgeführt wird, indem dieser Bremsteil (16) auf eine Temperatur zwischen 150 und 250°C gebracht wird.

6. Verfahren der Herstellung gemäß Anspruch 4 oder 5, **dadurch gekennzeichnet, daß** der Schritt der selektiven Härtung des Bremsteiles (16) die folgenden Schritte umfaßt:
- Anordnen des über die austenitische Umwandlungstemperatur des Stahls gebrachten Radrohlings (8') im wesentlichen horizontal, wobei sein Führungsteil (18) oberhalb seines Bremsteiles (16) angeordnet ist, dann
- Bespritzen des Bremsteiles (16) mittels einer Kühlflüssigkeit.

7. Verfahren der Herstellung gemäß irgendeinem der Ansprüche 4 bis 6, **dadurch gekennzeichnet, daß** zumindest das gehärtete Bremsteil (16) auf eine Temperatur zwischen 850 und 900°C erhitzt wird, während einer Dauer von zwischen 2 und 3 Stunden.

8. Verfahren der Herstellung gemäß irgendeinem der Ansprüche 4 bis 7, **dadurch gekennzeichnet, daß** die Gesamtheit des Radrohlings (8') erhitzt wird, nachdem die Härtung des Bremsteiles (16) durchgeführt worden ist.

9. Verfahren der Herstellung gemäß irgendeinem der Ansprüche 4 bis 8, **dadurch gekennzeichnet, daß** der Radrohling (8') aus einem Kohlenstoffstahl entsprechend dem Typ R2 oder dem Typ R8 der Norm UIC 812-3 hergestellt wird.

10. Verfahren der Herstellung gemäß Anspruch 9, **dadurch gekennzeichnet, daß** der Kohlenstoffstahl in Gew.-% bis zu 0,700% Silizium, bis zu 0,120% Molybdän und bis zu 0,400% Chrom enthält.

11. Drehgestell (2) eines Untergrundbahnwagens oder ähnliches mit Luftbereifung, umfassend Luftreifen (4), ein Fahrgestell (6), das auf Luftreifen (4) und Sicherheitsräder (8) gelagert ist, von denen jeder zwischen dem Rahmen (6) und einem korrespondierenden Luftreifen (4) angeordnet ist, **dadurch gekennzeichnet, daß** jedes Sicherheitsrad (8) irgendeinem der Ansprüche 1 bis 3 entspricht.

## Claims

1. Safety wheel (8) for a bogie (2) of a pneumatic-tyred (4) metro carriage, or the like, intended to be fitted between a chassis (6) of the bogie (2) and a corresponding pneumatic tyre (4), the said wheel (8) having an external peripheral zone (14) comprising a braking portion (16), suitable for taking the action of a mechanical braking member, as well as a guide portion (18), projecting radially outwards from the braking portion (16), **characterised in that** the hardness of the braking portion (16) is clearly greater than the hardness of the guide portion (18), and **in that**, on the Brinell scale, the hardness of the braking portion (16) is between 293 and 311, whilst the hardness of the guide portion (18) is between 195 and 220.

2. Safety wheel according to Claim 1, **characterised in that** it is made of a carbon steel in accordance with type R2 or type R8 of the UIC 812-3 standard.

3. Safety wheel according to Claim 2, **characterised in that** the said carbon steel contains, by weight, up to 0.700 % silicon, up to 0.120 % molybdenum and up to 0.400 % chromium.

4. Method for the production of a safety wheel (8) for a bogie (2) of a pneumatic-tyred (4) metro carriage, or the like, intended to be fitted between a chassis (6) of the bogie and a corresponding pneumatic tyre (4), in which method a blank (8') made of steel is brought to above the austenitic transformation temperature of the said steel, the said blank (8') having the shape of the final wheel (8) and having an external peripheral zone (14) comprising a braking portion (16), suitable for taking the action of a mechanical braking member, as well as a guide portion (18), projecting radially outwards from the braking portion (16), **characterised in that** it comprises the following steps:
- carrying out selective quenching of the braking portion (16) of the blank (8') brought above the austenitic transformation temperature of the said steel, without subjecting the guide portion (18) to this quenching, then
- heating at least the quenched braking portion (16) in order to effect an operation for annealing this braking portion,
in such a way that the hardness of the braking portion (16) of the final wheel is clearly greater than the hardness of the guide portion (18) of this wheel, and **in that**, on the Brinell scale, the hardness of the braking portion (16) is between 293 and 311, whilst the hardness of the guide portion (18) is between 195 and 220.

5. Production method according to Claim 4, **characterised in that** the selective quenching of the braking portion (16) is carried out for a period of between 5 and 15 minutes, so as to bring this braking portion (16) to a temperature of between 150 and 250 °C.

6. Production method according to Claim 4 or 5, **characterised in that** the step for selective quenching of the braking portion (16) comprises the following steps:
- arranging the blank (8') brought above the austenitic transformation temperature of the said steel essentially horizontally, its guide portion (18) being positioned above its braking portion (16), then
- spraying the braking portion (16) by means of a cooling liquid.

7. Production method according to any one of Claims 4 to 6, **characterised in that** at least the quenched braking portion (16) is heated to a temperature of between 850 and 900 °C for a period of between 2 and 3 hours.

8. Production method according to any one of Claims 4 to 7, **characterised in that** the entire blank (8') is heated after having carried out the quenching of the braking portion (16).

9. Production method according to any one of Claims 4 to 8, **characterised in that** the said blank (8') is made of a carbon steel in accordance with type R2 or type R8 of the UIC 812-3 standard.

10. Production method according to Claim 9, **characterised in that** the said carbon steel contains, by weight, up to 0.700 % silicon, up to 0.120 % molybdenum and up to 0.400 % chromium.

11. Bogie (2) of a pneumatic-tyred metro carriage, or the like, comprising pneumatic tyres (4), a chassis (6) bearing on these pneumatic tyres (4) and safety wheels (8), each of which is fitted between the chassis (6) and a corresponding pneumatic tyre (4), **characterised in that** each safety wheel (8) is in accordance with any one of Claims 1 to 3.
